# EUROPEAN PATENT SPECIFICATION

(11) **EP 2 298 608 B1**
(45) Date of publication and mention of the grant of the patent: **18.04.2018**
(21) Application number: 09773248.1
(22) Date of filing: 22.05.2009
(51) Int. Cl.: B60R 16/02, H02G 3/04

(54) **Device comprising a vehicle and a wire harness**
Vorrichtung umfassend ein Fahrzeug und einen Kabelbaum
Dispositif comprenant un véhicule et un faisceau électrique

(30) Priority: 02.07.2008 JP 2008173378
(43) Date of publication of application: 23.03.2011
(73) Proprietor: Yazaki Corporation, Minato-ku Tokyo 108-8333 (JP)
(72) Inventor: OGUE, Takeshi, Kosai-shi Shizuoka 431-0431 (JP); ICHIKAWA, Hidehiro, Kosai-shi Shizuoka 431-0431 (JP); OGA, Tatsuya, Kosai-shi Shizuoka 431-0431 (JP)
(74) Representative: Grünecker Patent- und Rechtsanwälte PartG mbB
(86) International application number: PCT/JP2009/059414
(87) International publication number: WO 2010/001670

(56) References cited:
- EP-A1- 0 865 130
- WO-A1-2007/029801
- WO-A1-2008/062885
- DE-A1- 10 032 308
- JP-A- 2003 151 371
- JP-A- 2004 268 803
- JP-A- 2006 156 051
- JP-A- 2007 074 848
- US-A1- 2005 162 015

## Description

### Field of the Invention

The present invention relates to a device including a vehicle and a wire harness according to the preamble of claim 1. The wire harness is wired through a vehicle under-floor located outside a vehicle body frame. The wire harness includes a plurality of high-voltage electric wires and a protection member protecting the plurality of high-voltage electric wires.

### Description of the Related Art

**A device including a vehicle and a wire harness as described in the preamble of claim 1 is already known from** JP 2004 268803 A**.**

DE 100 32 308 A1 **discloses a corrugated tube with peripheral walling which extends at least partly over a non-circular free conductor cross-section and is provided with corrugations having troughs, flanks and crests with the troughs forming the free conductor cross-section.**

EP 0865 130 A1 **describes a corrugated tube and a wire harness having the tube as a cover.** WO 2008/062885 A1 **refers to a shield conductor and a shield conductor manufacturing method.**

US 2005/162015 A1 **describes a power cable holding structure for a vehicle in which compressor power cables having a small outer diameter are disposed in the gaps between the outer surface of motor power cables having a large outer diameter and the inner surface of a protective pipe.**

A wire harness disclosed in Patent Literature 1 listed below includes three high-voltage electric wires, three metal protection pipes which respectively receive the three high-voltage electric wires for protection. The high-voltage electric wire connects a motor mounted at a front portion of a vehicle and an inverter mounted at middle or rear portion of the vehicle.

The wire harness is wired through a vehicle under-floor located outside a vehicle body frame. Thus, the metal protection pipe is arranged to protect the high-voltage electric wire from for example pebbles or water. The metal protection pipe is arranged to be rigid enough to protect the high-voltage electric wire from pebbles or water and to prevent deformation of the high-voltage electric wire. Furthermore, since the metal protection pipe is made of metal, the metal protection pipe serves as an electromagnetic shield.

The wire harness is manufactured by inserting a high-voltage electric wire through a straight metal protection pipe, preparing three of such high-voltage electric wires inserted into the metal protection pipe, and then bending the metal protection pipe according to a wiring path at a vehicle under-floor along which the metal protection pipe will be wired. The wire harness manufactured in a wire harness manufactory in a manner as described above is then transported to a vehicle manufacturer's assembling factory, in which the wire harness will be mounted at a predetermined position in the vehicle, completing the wiring.

At a time of the transportation of the wire harness, the wire harnesses must be positioned with a sufficient space between each other so that the wire harnesses do not contact to each other to prevent deformation of the wire harness. In addition, since the metal protection pipe is bent in a three-dimensional manner, there is required a three-dimensional space. Patent Literature 2 discloses a wire harness addressing the above-described problem regarding to the space requirement.

The wire harness disclosed in Patent Literature 2 includes three high-voltage electric wires and a metal protection pipe, the metal protection pipe collectively receiving and protecting the three high-voltage electric wires together. The high-voltage electric wire connects an inverter, a battery and a device such as a motor. The metal protection pipe is a pipe member made of metal and has a circular cross-sectional shape. An outer circumference and an inner circumference of the projection pipe are provided with a protrusion and a groove formed in a spiral manner with a constant interval. In other words, the metal protection pipe is formed into a corrugated shape such that a diameter of the metal protection pipe increases and decreases alternatively along an axis of the metal protection pipe. The corrugated shape is formed throughout substantially the entire length of the metal protection pipe (except at a mounting member provided at both ends of the metal protection pipe). The metal protection pipe is made of metal to serve as an electromagnetic shield.

The metal protection pipe according to Patent Literature 2 is arranged so that when the metal protection pipe is bent and deformed, a pitch of the corrugation at an inward-side of the bending decreases while a pitch of the corrugation at an outward-side of the bending increases. Thus, the bending does not cause a significant change in the thickness, preventing breakage. The metal protection pipe can be bent by hand while maintaining a constant diameter of the tubular shape. Also, the metal protection pipe is provided with certain rigidity so that the bent shape can be maintained.

The three high-voltage electric wires are collectively received inside the above-described metal protection pipe in a manner such that the three electric wires together form a trefoil formation (i.e. a line connecting respective centers of the three wires substantially forms a right triangle). The high-voltage electric wires in the trefoil formation are positioned at a central position in the metal protection pipe and are positioned at a predetermined distance from an inner face of the pipe.

For the wire harness disclosed in Patent Literature 2, since the metal protection pipe can be bent by hand, the metal protection pipe may be arranged in a straight form or may be folded along a two-dimensional direction at a time of the transportation from the wire harness manufactory to the vehicle manufacturer's assembling factory. That is, compared to the wire harness of Patent Literature 1, the wire harness of Patent Literature 2 is advantageous in providing more space.

After being transported to the vehicle manufacturer's assembling factory, the wire harness of Patent Literature 2 is then bent or elongated according to a wiring path at the vehicle, and then mounted to the vehicle.

Patent Literature 1: Japanese Patent Application Publication No. 2004-224156
Patent Literature 2: Japanese Patent Application Publication No. 2007-66825

### Summary of the Invention

### Technical Problem

As described above, the wire harness disclosed in Patent Literature 2 can be folded in the two-dimensional direction and transported to the vehicle manufacturer's assembling factory. Thus, it is apparent that, compared to the wire harness of Patent Literature 1, the wire harness of Patent Literature 2 is advantageous in providing more space at a time of the transportation. However, the wire harness of Patent Literature 2 (hereinafter refer as "the wire harness") has some problems.

A first problem is that, since the metal protection pipe is bendable and has the circular cross-sectional shape, such shape is suitable if the folding direction is not prescribed, whereas if the folding direction is prescribed, it is difficult for a worker to accurately fold the protection pipe in the prescribed folding direction.

A second problem is that, since the metal protection pipe has the circular cross-sectional shape and is formed into the corrugated shape throughout substantially the entire length, the protection pipe cannot be firmly mounted along the vehicle under-floor (i.e. the stability of the mounting state is poor). In addition, the corrugated shape forms a point contact with respect to the vehicle under-floor, increasing a chance of attrition.

A third problem is that, since the metal protection pipe has the circular cross-sectional shape and requires relatively large diameter to position the three high-voltage electric wires at the central position in the protection pipe at a predetermined distance from the inner face of the protection pipe, when the protection pipe is mounted along the vehicle under-floor, the distance from the ground becomes short (close). This is adversely advantageous in view of the protection of the electric wires.

A fourth problem is that, since the metal protection pipe is made of metal, it is difficult to reduce weight thereof. In addition, for example, electrical leakage in the high-voltage electric wire inside the metal protection pipe can cause a great current flow throughout the metal protection pipe.

A fifth problem is that, since the metal protection pipe has a certain degree of rigidity, there is a difficulty in handling (i.e. the advantageous retention of shape after bending may turn out to be a disadvantage).

In addition to the above-described problems, there is also a problem that, since the three high-voltage electric wires are positioned at the central position in the pipe at a distance from the inner face of the pipe, there is created a large space gap between the high-voltage electric wires and the inner face of the pipe. Therefore, without thinking of the material of the pipe, it is likely that such structure is relatively vulnerable to an external force (although it is possible to strengthen the structure against the external force by providing an additional component member, that causes an increase in manufacturing cost).

To address the above-described problems, an object of the present invention is to provide a device including a vehicle and a wire harness which can improve, for example, the workability, stability, durability and safety. Furthermore, an object of the present invention is to provide a device including a vehicle and a wire harness which can reduce the manufacturing cost.

### Solution to Problem

**The above and other objects of the invention are achieved by the device including a vehicle and a wire harness according to claim 1. Preferred embodiments are claimed in the dependent clams.**

According to the above-described present invention, the protection member is arranged to include the flat-shaped tube disposed at the vehicle under-floor. Thus, since the flat-shaped tube is made of synthetic resin, the weight of the protection member can be reduced compared to the one made of metal. This reduction in the weight can facilitate the handling of the wire harness itself. Furthermore, the flat-shaped tube made of synthetic resin can be prevented from a large current flowing therethrough, improving the safety. Furthermore, since the flat-shaped tube has the non-circular cross-sectional shape and has the shape corresponding to the arrangement of the high-voltage electric wires aligned in a row, the distance from the ground to the flat-shaped tube can be greater compared to the case of the protection member having a circular cross-sectional shape. Consequently, a chance of breakage can be decreased, ensuring the protection of the high-voltage electric wire.

Furthermore, since the flat-shaped tube is formed into the seamless fashion, the water which may impinge on the flat-shaped tube will not enter inside the flat-shaped tube. Consequently, the high-voltage electric wire can be protected. Furthermore, since the height of the flat-shaped tube is arranged shorter than the height of the reinforcement, the flat-shaped tube disposed adjacent to the reinforcement can be hidden within a dead space. Consequently, a chance of the breakage of the flat-shaped tube can be decreased even more. Furthermore, by disposing the flat-shaped tube adjacent to the reinforcement, it is possible to obtain the strong structure with the reinforcement without employing an additional component material.

Furthermore, since the flat-shaped tube is formed into the concertina-shape and is arranged to be bendable, it is possible to regulate the bending direction of the flat-shaped tube. Therefore, a worker can easily figure out the bending direction, thereby improving the workability. Furthermore, since the flat-shaped tube is provided with the concertina-shape having the top face which may be mounted at the vehicle under-floor, it is possible to ensure the stability of the flat-shaped tube mounted along the vehicle under-floor. Furthermore, since the flat-shaped tube has the top face as the mount face to be mounted to the vehicle under-floor, the flat-shaped tube can contact with respect to the vehicle via a surface-to-surface contact. Consequently, a chance of attrition can be reduced compared to a case of a point contact or a line-to-line contact, improving the durability.

The present invention further provides, in claim 2, the wire harness according to claim 1, wherein the internal space of the flat-shaped tube is adjusted such that the high-voltage electric wire serves as a tube deformation regulating member when an external force causing an inward deformation of the flat-shaped tube is applied to the flat-shaped tube.

According to the present invention described above, the flat-shaped tube with the non-circular cross-sectional shape is shaped suitable to the transversely-aligned high-voltage electric wires and is further shaped so that the internal space is adjusted in a manner that the high-voltage electric wires can serve as the tube deformation regulating member. Consequently, compared with the wire harness having the circular cross-sectional shape, the large space gap can be reduced dramatically, thereby reducing a portion vulnerable to the external force.

The present invention further provides, in claim 3, the wire harness according to claim 1 or claim 2, wherein the high-voltage electric wire is a flat-shaped high-voltage electric wire including a conductor selected from a group consisting of: a flat conductor having a rectangular-shaped cross-sectional shape; and a substantially flat conductor formed with a plurality of element wires or twisted wires aligned in a line.

According to the present invention described above, since the conductor is formed into the flat-shape having the cross-sectional area the same as the conductor having the circular cross-sectional shape, the transversely-aligned high-voltage electric wires can be arranged in a downsized manner. Thus, use of the flat-shaped high-electric wires can downsize the wire harness itself since the flat-shaped tube is formed in accordance with the transversely-aligned high-voltage electric wires. By downsizing the flat-shaped tube, the shape of the wire harness can be more suitable to be hidden within the dead space next to the reinforcement. Consequently, the flat-shaped tube can be prevented from the breakage, thereby further ensuring the protection of the high-voltage electric wires. Furthermore, the downsizing of the flat-shaped tube can provide more space at a time of the transportation of the wire harness.

The present invention further provides, in claim 4, the wire harness according to any one of claims 1 through 3, wherein the flat-shaped tube is provided with a separate fixation member fixing the flat-shaped tube with respect to the vehicle under-floor.

According to the present invention described above, the flat-shaped tube is fixed to the vehicle under-floor via the fixation member. By using the fixation member, the flat-shaped tube does not need to be shaped in a complex manner for the fixation. Consequently, the manufacturing cost can be decreased and the manufacturing performance can be improved.

The present invention further provides, in claim 5, the wire harness according to any one of claims 1 through 4, further including a low-voltage electric wire, wherein the low-voltage electric wire is aligned with the transversely-aligned high-voltage electric wires.

According to the present invention described above, the wire harness can include the high-voltage circuit as well as the low-voltage circuit. The present invention can enhance the modularization by integrally including the low-voltage circuits extending from the front portion inside vehicle to the rear portion inside vehicle to connect the desired devices.

### Advantageous Effects of the Invention

According to the present invention of claim 1, the characteristic features of the flat-shaped tube can improve the workability, durability and safety compared to the conventional wire harness. Furthermore, according to the present invention, use of the reinforcement as the protection member can eliminate a need for an additional component member, thereby reducing the cost as well as reducing weight.

According to the present invention of claim 2, by forming the flat-shaped tube into the shape such that the high-voltage electric wire can serve as the tube deformation regulating member, the structurally-vulnerable portion can be reduced dramatically.

According to the present invention of claim 3, downsizing of the wire harness itself can prevent the breakage of the wire harness and can provide more space at a time of the transportation.

According to the present invention of claim 4, use of the fixation member can simplify the shape of the plat-shaped tube.

According to the present invention of claim 5, the high-voltage circuit and the low-voltage circuit can be formed in one to enhance the modularization. Thus, the workability in the vehicle manufacture's assembling factory can be improved, and also there can be provided more space in the vehicle.

### Brief Description of the Drawings

Fig. 1 is an illustration of one embodiment of a device including a vehicle and a wire harness according to the present invention;
Figs. 2A and 2B show a protection member for a vehicle under-floor and a reinforcement, Fig. 2A being an enlargement view of the vehicle under-floor seen from a ground (partly showing a cross-sectional view) and Fig. 2B being a cross-sectional view taken along a line A-A shown in Fig. 2A;
Fig. 3 is an illustration showing a flow from a manufacture of the wire harness to a vehicle assembling, in which (a) shows the wire harness just after the manufacture, (b) shows the wire harness being received in a typical returnable box and being transported, (c) shows the wire harness prior to the vehicle assembling and (d) shows the wire harness after the vehicle assembling;
Fig. 4 is a schematic cross-sectional view explaining a difference between the present invention having a non-circular cross-sectional shape and a comparative example having a circular cross-sectional shape;
Figs. 5A and 5B are cross-sectional views showing another embodiment of the wire harness according to the present invention, Fig. 5A showing a case of two high-voltage electric wires, Fig. 5B showing a case of three high-voltage electric wires and Fig. 5C showing a comparative example; and
Figs. 6A through 6C are cross-sectional views showing yet another embodiment of the wire harness according to the present invention, Fig. 6A showing a first example of a flat-shaped high-voltage electric wire, Fig. 6B showing a second example of a flat-shaped high-voltage electric wire and Fig. 6C showing a third example of a flat-shaped high-voltage electric wire.

### Description of Embodiments

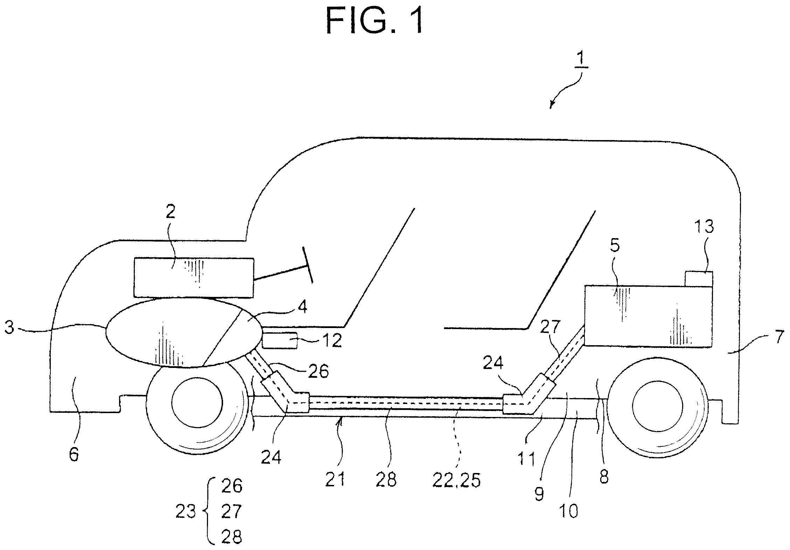

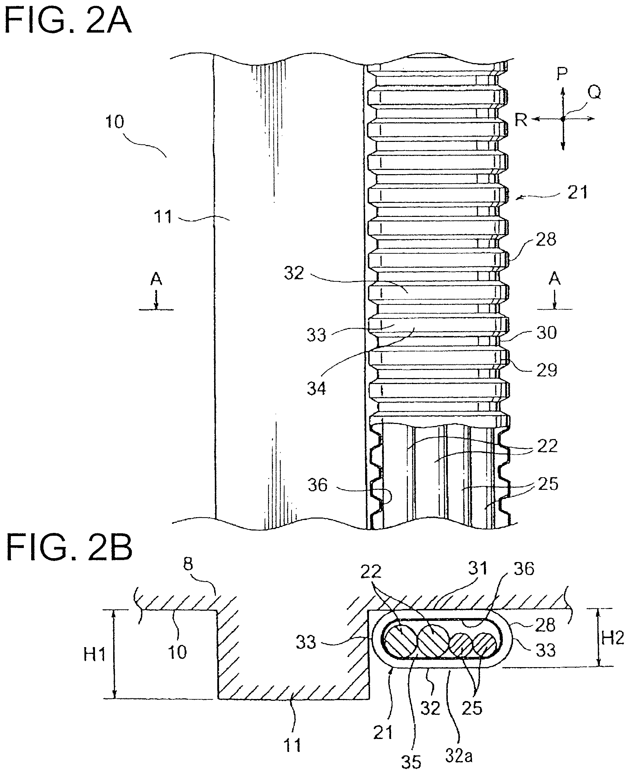

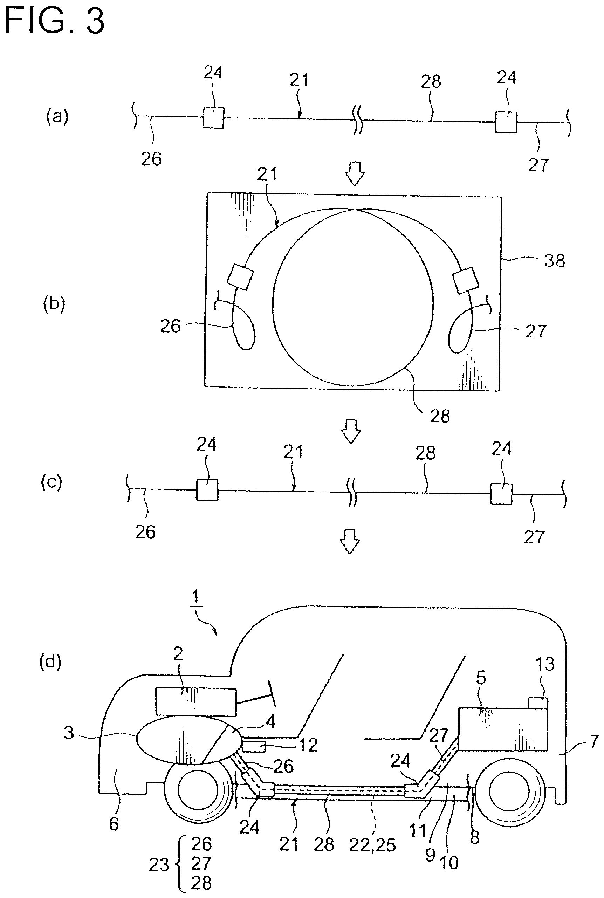

The present invention will be explained below in reference with the drawings. Fig. 1 is an illustration of one embodiment of a device including vehicle and a wire harness according to the present invention. Figs. 2A and 2B show an under-floor protection member and a reinforcement, Fig. 2A being an enlargement view of a vehicle under-floor seen from a ground (partly showing a cross-sectional view), and Fig. 2B being a cross-sectional view taken along a line A-A shown in Fig. 2A. Fig. 3 is an illustration showing a flow from a manufacture of the wire harness to a vehicle assembling, in which (a) shows the wire harness just after the manufacture, (b) shows the wire harness being received in a typical returnable box and being transported, (c) shows the wire harness prior to the vehicle assembling and (d) shows the wire harness after the vehicle assembling.

A wire harness according to the present invention is a wire harness to be wired at a hybrid vehicle or an electric vehicle. The following is an exemplary case of the hybrid vehicle (it should be understood that a structure, constitution and advantageous effects of the wire harness of the present invention are basically the same in a case of the electric vehicle).

In Fig. 1, a reference number 1 indicates a hybrid vehicle. The hybrid vehicle 1 is a vehicle that uses two power sources, an engine 2 and a motor 3, combined together. Power is supplied to the motor 3 from a battery 5 via an inverter 4. In this embodiment, the engine 2, the motor 3 and the inverter 4 are mounted at a front portion inside vehicle 6 where front wheels are located. In addition, the battery 5 is mounted at a rear portion inside vehicle 7 where rear wheel are located.

A reference number 8 indicates a vehicle body frame. In the drawing, an upper side of the vehicle body frame 8 corresponds to a vehicle above-floor 9, and an under side of the vehicle body frame 8 corresponds to a vehicle under-floor 10. A reinforcement 11 having a convex cross-sectional shape is provided at the vehicle under-floor 10 to improve the strength of the vehicle. The reinforcement 11 is formed so as to extend from the front to rear of the vehicle. A reference number 12 shown at the front portion inside vehicle 6 indicates an electrical junction box such as a known relay box. In addition, a reference number 13 shown at the rear portion inside vehicle 7 indicates a known low-voltage battery (the shown arrangement of the low-voltage battery 13 is an example only).

In this embodiment, the motor 3 includes a motor and a generator, and the inverter 4 includes an inverter and a converter. The inverter 4 is an inverter assembly in which the inverter may include an air conditioner inverter, an inverter for a generator and an inverter for a motor. The battery 5 may be a Ni-MH battery or a Li-ion battery arranged in a module. In addition, a storage device such as a capacitor may also be used.

The inverter 4 and the battery 5 are connected via a wire harness 21 of the present invention.

The wire harness 21 according to the present invention includes a plurality of high-voltage electric wires 22 electrically connecting the inverter 4 and the battery 5, a protection member 23 protecting the plurality of high-voltage electric wires 22, and a fixation member 24 for a fixation with respect to the vehicle. Furthermore, in this embodiment, the wire harness 21 may also include, without a limitation to, a known plurality of low-voltage electric wires 25 (that is, the low-voltage electric wires 25 are included since in this embodiment the low-voltage battery 13 is arranged at the rear portion inside vehicle 7. This embodiment is intended to enhance the modularization). The wire harness 21 is formed so as to extend from the front portion inside vehicle 6 through the vehicle under-floor 10 to the rear portion inside vehicle 7. The wire harness 21 is arranged to penetrate through the vehicle body frame 8. The respective components of the wire harness 21 will be explained below.

The above-described high-voltage electric wire 22 is a known electric cable, and the high-voltage electric wire 22 used in this embodiment has a circular cross-sectional shape with a predetermined diameter. The high-voltage electric wire 22 has a diameter larger than the one of the above-described low-voltage battery 25, and a conductor at a center thereof is made of copper, copper alloy or aluminum. There are provided two high-voltage electric wires 22 in this embodiment. Each end of these electric wires 22 is provided with a connector (not shown) having a terminal clamp for a connection of devices. In addition, the high-voltage electric wire 22 may include a braid performing a shielding function (in regards to this shielding function, there may be provided a braid which collectively covers the plurality of high-voltage electric wires 22 together).

The above-described low-voltage electric wire 25 and the high-voltage electric wire 22 are protected together by the protection member 23. One end of the low-voltage electric 25 is connected to the above-described electric junction box 12, and the other end of the low-voltage electric wire 25 is connected to the low-voltage battery 13.

The protection member 23 for a protection of the plurality of high-voltage electric wires 22 and the low-voltage electric wires 25 is constituted of several kinds of separate components. Specifically, the protection member 23 is constituted of an in-vehicle protection member 26, 27 and an under-floor protection member 28. In this embodiment, the above-described fixation member 24 is provided with the same function as the protection member 23.

The in-vehicle protection member 26, 27 is a protection member located inside the vehicle near the vehicle above-floor 9. The in-vehicle protection member 26, 27 is made of insulating synthetic resin, and in this embodiment, the in-vehicle protection member 26, 27 is a known circular corrugated tube having a circular cross-sectional shape (A protector may also be used. The protector and the circular corrugated tube may be combined together. Any arrangement of the in-vehicle protection member 26, 27 is possible as long as the in-vehicle protection member 26, 27 can protect the high-voltage electric wire 22 and such inside the vehicle). The in-vehicle protection member 26 is located at the front portion inside vehicle 6. The in-vehicle protection member 27 is located at the rear portion inside vehicle 7.

In Fig. 1 and Fig. 2, the above-described under-floor protection member 28 is a flat-shaped tube made of insulating synthetic resin and has a non-circular (in this embodiment an ellipse) cross-sectional shape. The flat-shaped tube is formed into a concertina-shape such that independently- and circumferentially-arranged projection portion 29 and a recess portion 30 are provided alternatively in a continuous manner along an axial direction of the member (refer to direction indicated by an arrow P in Fig. 2). In other words, the under-floor protection member 28 is formed into a shape of a flat corrugated tube. The under-floor protection member 28 having such shape has a limitation in a bending direction, such that the under-floor protection member 28 can easily be bent in a Q direction which is perpendicular to the plane of the paper, but can hardly be bent in an R direction (width direction of the member).

To be more specific with the shape of the under-floor protection member 28, the under-floor protection member 28 is formed with a pair of opposed-planes and a pair of curved faces connecting these planes (thus forming an ellipse-shaped cross-sectional shape, and the ellipse-shape of which is an example only). Specifically, the under-floor protection member 28 has an under-floor mount face 31, a ground-facing face 32 and a pair of curved faces 33, and thus the under-floor protection member 28 has an ellipse-like cross-sectional shape. The projection portion 29 includes a top face 34 which may be the under-floor mount face 31, the ground-facing face 32 and the curved face 33. In addition, the under-floor mount face 31 and the ground-facing face 32 have a linear cross-sectional shape and are flat portions extending linearly along the axial direction P of the under-floor protection member 28.

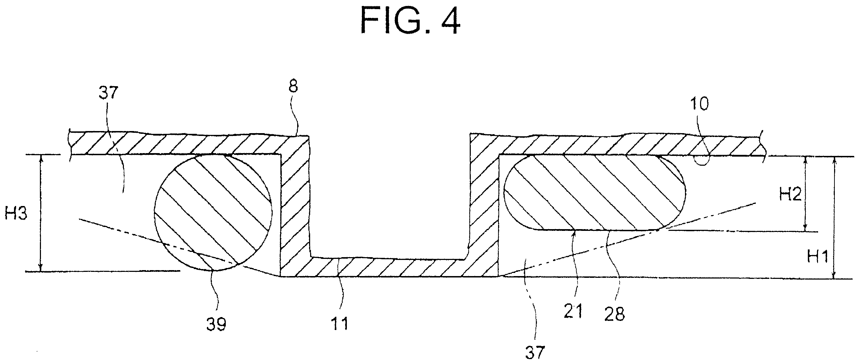

The reason for forming the under-floor protection member 28 into the above-described shape is to arrange a height H2 of the under-floor protection member 28 to be shorter than a height H1 of the reinforcement 11 (H1 is a distance from the vehicle under-floor 10 to a projecting end face of the reinforcement 11), that is to arrange the under-floor protection member 28 to be shorter in height than the reinforcement 11. Furthermore, the above-described reason also includes arranging an internal space 35 to be suitable for the arrangement of the high-voltage electric wire 22 and the low-voltage electric wire 25 aligned transverse to each other. With the high-voltage electric wire 22 and the low-voltage electric wire 25 aligned transverse to each other, the internal space 35 is arranged so that a space gap between the high-voltage electric wire 22 and a member inner face 36 is minimized (the space gap may be adjusted without adversely affecting the manufacturing). The under-floor protection member 28 is arranged in a shape such that when the under-floor protection member 28 is disposed adjacent to the reinforcement 11, the under-floor protection member 28 can be hidden in a dead space 37 (refer to Fig. 4) produced by the reinforcement 11.

The under-floor protection member 28 is formed into a seamless fashion having no slit in the axial direction of the member (refer to the P direction in Fig. 2). The under-floor protection member 28 is arranged so that the high-voltage electric wire 22 and the low-voltage electric wire 25 can be inserted into the under-floor protection member 28 from one opening thereof towards the other opening thereof.

The above-described fixation member 24 shown in Fig. 1 is one of several kinds of fixation members for a fixation of the wire harness 21 to the vehicle. This embodiment shows one example using a protector made of synthetic resin and with a threadably-mounting portion for the vehicle body frame 8. The fixation member 24 is a component separate from the protection member 23 and is, in this embodiment, formed to maintain the under-floor protection member 28 along the vehicle under-floor 10. The protector may be replaced with other suitable members such as a clip, a bracket, or a band. The number and a location of the fixation member 24 shown in Fig. 1 are an example only. The fixation member 24 is arranged to connect the in-vehicle protection member 26, 27 and the under-floor protection member 28 (this arrangement is an example only).

Next, the flow of the manufacture of the wire harness 21 to the vehicle assembling will be explained in reference with Fig. 3.

In Fig. 3, in (a), the fixation member 24 is provided at a predetermined position at the protection member 23, the protection member 23 including the in-vehicle protection member 26, 27 and the under-floor protection member 28. Then, the plurality of high-voltage electric wires 22 and the low-voltage electric wires 25 are inserted into the protection member 23, followed by processing the each end of the high-voltage electric wires 22 and the low-voltage electric wires 25, the ends being exposed from the in-vehicle protection member 26, 27 (a connector or a terminal clamp is provided to the end), thereby completing the manufacture of the wire harness 21 of the present invention.

The manufactured wire harness 21 is bent at a position corresponding to the under-floor protection member 28 and the in-vehicle protection member 26, 27 as shown in (b), and then received inside a returnable box 38. The wire harness 21 received inside the returnable box 38 is then transported to a vehicle manufacturer's assembling factory by a transport vehicle. At the assembling factory, the wire harness 21 is taken out from the returnable box 38 prior to the vehicle assembling, as shown in (c). Then, the wire harness 21 is mounted at a predetermined position of the vehicle, completing the wiring. At this time, the under-floor mount face 31 is mounted adjacent to the reinforcement 11 of the vehicle under-floor 10 so that the ground-facing face 32 as a flat portion faces the ground.

As described above, according to the present invention, the in-vehicle protection member 26, 27 and the under-floor protection member 28 of the protection member 23 of the wire harness 21 are made of synthetic resin. Therefore, the weight of the wire harness 21 can be reduced compared to the conventional wire harness having the protection pipe made of metal (refer to Patent Literature 1, 2). Consequently, the reduction of the weight can facilitate the handling of the wire harness 21 itself, improving the workability. Also, it is possible to conform to a recent trend of the reduction of the weight of the vehicle.

Furthermore, according to the present invention, the under-floor protection member 28 is made of insulating synthetic resin. Thus, even in case of internal electric leakage, the under-floor protection member 28 can be prevented from a large current flowing therethrough. Consequently, the safety can be improved compared to the conventional wire harness.

Furthermore, according to the present invention, the under-floor protection member 28 is the flat-shaped tube with the non-circular cross-sectional shape and is shaped in accordance with the arrangement of the plurality of high-voltage electric wires 22 and the low-voltage electric wires 25 aligned transversely. Therefore, a chance of the breakage of the under-floor protection member 28 can be reduced, ensuring the protection of the high-voltage electric wire 22. To be more specific about this advantageous effect, as shown in Fig. 4, the height H2 of the under-floor protection member 28 is arranged shorter than the height H1 of the reinforcement 11 (H1>H2). Therefore, a distance between the under-floor protection member 28 and the ground is greater than a distance between the projecting end face of the reinforcement 11 and the ground. Consequently, the under-floor protection member 28 can be prevented from being influenced by an adverse affect from the ground side. Furthermore, since the ground-facing face 32 as the flat portion is arranged to face the ground, when small pebbles or objects impinge on the under-floor protection member 28, the ground-facing face 32 deforms more compared to the conventional wire harness (refer to Patent Literature 1, 2), thereby decreasing a chance of the under-floor protection member 28 being influenced by an adverse affect from the ground side. Consequently, a chance of the breakage of the under-floor protection member 28 can be reduced, thereby further ensuring the protection of the high-voltage electric wire 22 and such.

Next, a comparative wire harness was manufactured based on the structure of the conventional wire harness (refer to Patent Literature 1, 2), and then a metal protection pipe 39 of the comparative wire harness was compared with the under-floor protection member 28. As a result of the comparison, a height H3 of the metal protection pipe 39 was greater than the height H2 of the under-floor protection member 28 (H2<H3). This is because, if the number of the electric wires is the same between the comparative wire harness and the under-floor protection member 28, for the metal protection pipe 39, the electric wires are piled-up within the metal protection pipe 39, and this piped-up portion causes increase in the height of metal protection pipe 39. Thus, even if the height H3 of the metal protection pipe 39 could successfully be arranged slightly shorter than the height H1 of the reinforcement 11 (H3<H1), the height H3 of the metal protection pipe 37 would not be as short as the height H2 of the under-floor protection member 28 (H2<H3). Consequently, the present invention can ensure the protection of the high-voltage electric wire 22 and such more than the conventional hire harness.

Furthermore, according to the present invention, the under-floor protection member 28 which is shorter in height than the reinforcement 11(H1>H2) is positioned adjacent to the reinforcement 11. Consequently, the under-floor protection member 28 can be completely hidden within the dead space 37, further decreasing the chance of the breakage (the metal protection pipe 39 of the above-described comparative wire harness does not completely hide within the dead space 37 but protrude therefrom).

Furthermore, according to the present invention, since the under-floor protection member 28 is arranged adjacent to the reinforcement 11, the reinforcement 11 can be utilized to provide a strong structure without a need for an additional component member.

Furthermore, according to the present invention, the under-floor protection member 28 is formed into a seamless fashion. Consequently, the water impinging on the under-floor protection member 28 will not enter thereinside, protecting the high-voltage electric wire 22 and such.

Furthermore, according to the present invention, the under-floor protection member 28 is formed into the concertina-shape which is easy to bend as well as into the flat-shaped tube. Consequently, the bending direction can be regulated. As a result, it can be easier for a worker to figure out the bending direction when bending and receiving the under-floor protection member 28 into the returnable box 38, improving the workability.

Furthermore, according to the present invention, the under-floor protection member 28 is formed into the flat-shaped tube having the concertina-shape having the top face 34, in which the top face 34 may correspond to the under-floor mount face 31. Consequently, the stability of the under-floor protection member 28 mounted along the vehicle under-floor 10 can be improved (the metal protection pipe 39 of the comparative wire harness provides poor stability due to the linearly-aligned point contacts). Furthermore, the contacting area with respect to the vehicle under-floor 10 can be increased, thereby decreasing the chance of attrition. In other words, the durability can be improved.

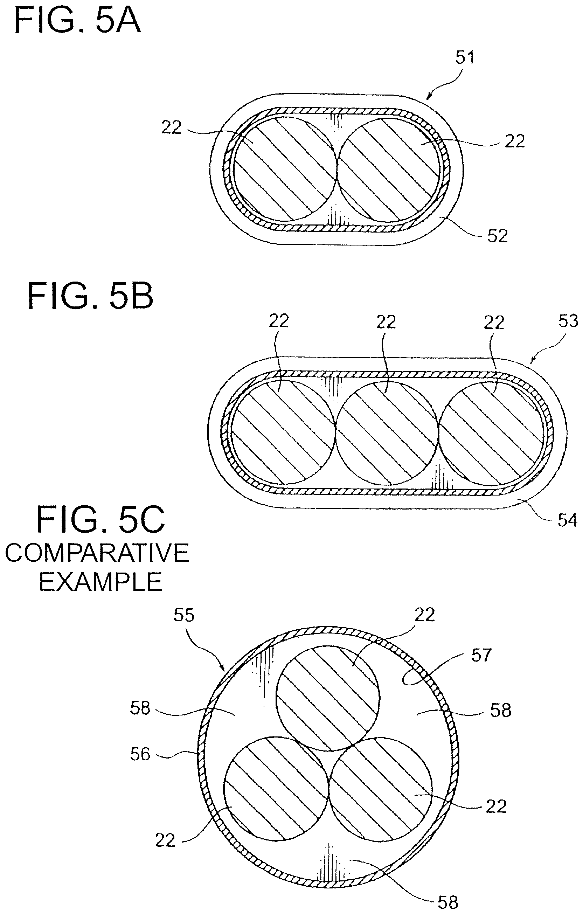

Furthermore, according to the present invention, the under-floor protection member 28 is arranged to be the flat-shaped tube having the non-circular cross-sectional shape and is formed into the shape corresponding to the arrangement of the high-voltage electric wires 22 and such aligned transversely. Also, the internal space 35 is adjusted such that the space gap between the high-voltage electric wire 22 and the inner face 36 is minimized. Consequently, the high-voltage electric wire 22 can serve as a tube deformation regulating member. Thus, if an external force by impinging pebbles and such is applied to the under-floor protection member 28 and caused a sudden change of shape, the inner face 36 abuts on the high-voltage electric wire 22 before the breakage occurs and distributes the force to the other portions of the under-floor protection member 28 (i.e. the high-voltage electric wire 22 is utilized to distribute the force). In addition, for example in a protection member having a circular cross-sectional shape (refer for example to Fig. 5C), a portion which is vulnerable to the external force (the portion with the space gap between the electric wire and the inner face) becomes large. Therefore, if the external force exerted by impinging pebbles and such is applied to this portion, it is likely that the concentrated external force causes the breakage. Thus, the prevention of the breakage of the under-floor protection member 28 can further ensure the protection of the high-voltage electric wire 22.

According to the wire harness 21 of the present invention, the characteristic features of the under-floor protection member 28 can improve the workability, stability, durability and safety compared to the conventional wire harness. Furthermore, according to the wire harness 21 of the present invention, the use of the reinforcement as a protection member can eliminate a need for an additional component member, thereby reducing the weight as well as the cost.

Another embodiment of a wire harness of the present invention will be explained in reference with Figs. 5A and 5B. Figs. 5A and 5B show cross-sectional views of another embodiment, in which Fig. 5A shows a case with two high-voltage electric wires, Fig. 5B shows a case with three high-voltage electric wires. Fig. 5C shows a comparative example.

A wire harness 51 of the present invention shown in Fig. 5A is arranged to correspond to two high-voltage electric wires 22. That is, the wire harness 51 corresponds to the wire harness 21 shown in Fig. 1 without the low-voltage electric wires 25. In addition, the wire harness 51 includes an under-floor protection member 52 as a flat-shaped tube having a non-circular cross-sectional shape and is formed into a shape corresponding to the two transversely-aligned high-voltage electric wires 22.

Meanwhile, a wire harness 53 of the present invention shown in Fig. 5B is arranged to correspond to three high-voltage electric wires 22. The wire harness 53 is arranged to connect a motor and an inverter to supply power (suppose that the motor is mounted at the front portion inside the vehicle, and the inverter is mounted at the rear portion inside the vehicle). The wire harness 53 includes an under-floor protection member 54 as a flat-shaped tube having a non-circular cross-sectional shape and is formed into a shape corresponding to an arrangement of the three transversely-aligned high-voltage electric wires 22.

A comparative wire harness 55 is manufactured to have the same structure as the conventional wire harness (refer to Patent Literature 1, 2) and to correspond to the three high-voltage electric wires 22. When looking at a cross-sectional view of a metal protection pipe 56 of the comparative wire harness 55, it can be seen that a space gap 58 between the high-voltage electric wire 22 and an inner face 57 is much greater compared to that of the wire harness 53 shown in Fig. 5B. Therefore, it is apparent that a portion which is vulnerable to the external force is smaller for the wire harness 53 shown in Fig. 5B (In addition, the wire harness 53 cannot serve as the tube deformation regulating member in the structure of the comparative wire harness 55).

The wire harnesses 51, 53 of the present invention shown in Figs. 5A and 5B have the same advantageous effect as the above-described wire harness 21 of the present invention. Furthermore, since the wire harness 51 corresponds to the two high-voltage electric wires 22, the size in the width direction of the member can be reduced, which can ensure that the wire harness 51 can be hidden within the dead space.

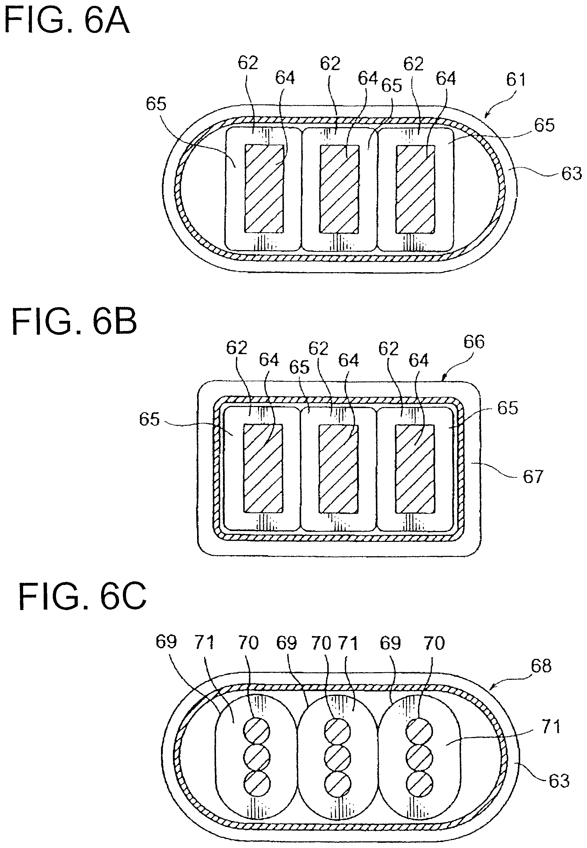

Next, yet another embodiment of the wire harness of the present invention will be explained in reference with Figs. 6A through 6C. Figs. 6A through 6C show cross-sectional views of another embodiment, in which Fig. 6A is a first example with a flat-shaped high-voltage electric wire, Fig. 6B is a second example with a flat-shaped high-voltage electric wire and Fig. 6C is a third example with a flat-shaped high-voltage electric wire.

A wire harness 61 of the present invention shown in Fig. 6A is arranged to correspond to three flat high-voltage electric wires 62 (the number of the electric wires is an example only). The wire harness 61 includes an under-floor protection member 63 formed into a flat-shaped tube having a non-circular cross-sectional shape. The under-floor protection member 63 is formed into a shape corresponding to the arrangement of the three transversely-aligned flat high-voltage electric wires 62. The flat-shaped high-voltage electric wire 62 includes a flat-shaped conductor 64 having a rectangular cross-sectional shape and an insulating cover 65 covering the flat-shaped conductor 64. The flat-shaped high-voltage electric wire 62 is received within the under-floor protection member 63 in a manner such that the longitudinal direction of the cross-sectional shape of the flat-shaped conductor 64 extends in an up-and-down direction with respect to the paper.

By employing the flat-shaped high-voltage electric wire 62, the size in the width direction of the member can be reduced. Consequently, the wire harness 61 itself can be downsized.

A wire harness 66 shown in Fig. 6B is an example of a modified form of the above-described wire harness 61, in which the wire harness 66 is further downsized. An under-floor protection member 67 is formed into a rectangular shape to correspond to the three flat high-voltage electric wires 62. According to the present invention, the downsizing of the wire harness can facilitate hiding the wire harness within the dead space next to the reinforcement, and also it can provide more space at a time of the transportation.

Furthermore, a wire harness 68 shown in Fig. 6C is another example of a modified form of the above-described wire harness 61, in which a flat-shaped high-voltage electric wire 69 has a different-shaped conductor. That is, the flat-shaped high-voltage electric wire 69 is provided with a conductor 70 including a plurality of element wires (or twisted wires) aligned to form a flat cross-sectional shape. The conductor 70 is covered by an insulating cover 71.

It should be understood that the present invention may be modified in a variety of ways and performed within a scope of the claims.

### Reference Signs List

- 1: a hybrid vehicle
- 2: an engine
- 3: a motor
- 4: an inverter
- 5: a battery
- 6: a front portion inside vehicle
- 7: a rear portion inside vehicle
- 8: a vehicle body frame
- 9: a vehicle above-floor
- 10 a: vehicle under-floor
- 11: a reinforcement
- 13: a low-voltage battery
- 21: a wire harness
- 22: a high-voltage electric wire
- 23: a protection member
- 24: a fixation member
- 25: a low-voltage electric wire
- 26, 27: an in-vehicle protection member
- 28: an under-floor protection member
- 29: a projection portion
- 30: a recess portion
- 31: an under-floor mount face
- 32: a ground-facing face
- 33: a curved face
- 34: a top face
- 35: an internal space
- 36: a member inner face
- 37: a dead space
- 38: a returnable box
- 51, 53: a wire harness
- 52, 54: an under-floor protection member
- 61, 66, 68: a wire harness
- 62, 69: a flat-shaped high-voltage electric wire
- 63, 67: an under-floor protection member
- 64: a flat-shaped conductor
- 65, 71: an insulating cover
- 70: a conductor

## Claims

1. A device comprising a vehicle and a wire harness,
wherein the vehicle is a hybrid vehicle (1) or an electrical vehicle, wherein the wire harness comprises a plurality of high-voltage electric wires (22) extending from a front portion (6) inside the vehicle through a vehicle under-floor (10) located outside of a vehicle body frame (8) to a rear portion (7) inside the vehicle, the plurality of high-voltage electric wires (22) connecting an inverter (4) with a battery (5) or with a motor (3); and
a protection member (23),
wherein the protection member (23) includes at least a tube (28) made of insulating synthetic resin, the tube (28) being located at the vehicle under-floor (10),
wherein the tube (28) is formed into a seamless fashion,
wherein the tube (28) is formed into a concertina-shape to allow the tube (28) to bend, the concertina-shape having a circumferential projection portion (29) and a circumferential recess portion (30) which are arranged alternatively in an axial direction in a continuous manner, and wherein the protection member (23) protects the plurality of high-voltage electric wires (22), **characterised in that** the tube (28) is a flat-shaped tube (28) and has a non-circular coss-sectional shape, the flat-shaped tube (28) has an internal space corresponding to an arrangement of the high-voltage electric wires (22) aligned in a row,
the projection portion (29) of the flat-shaped tube (28) has a top face (34) directly mounted, in a surface-to-surface contact, on the vehicle under-floor (10), and
the flat-shaped tube (28) is disposed adjacent to a reinforcement (11) provided at the vehicle body frame (8) so as to project from the vehicle under-floor (10) towards a ground and wherein the flat-shaped tube (28) has a height (H2) with which it projects from the vehicle under-floor (10) towards the ground shorter than a height (H1) of the reinforcement (11).

2. The device according to clam 1, wherein the internal space of the flat-shaped tube (28) is adjusted such that the high-voltage electric wire (22) serves as a tube deformation regulating member when an external force is applied to the flat-shaped tube (29) and caused inward deformation to the flat-shaped tube (28).

3. The device according to claim 1 or 2, wherein the high-voltage electric wire (22) is a flat-shaped high-voltage electric wire (62, 69) including a conductor (70) selected from a group consisting of: a flat conductor (64) having a rectangular-shaped cross-sectional shape; and a substantially flat conductor (70) formed with a plurality of element wires or twisted wires aligned in a line.

4. The device according to any one of claims 1 through 3, wherein the flat-shaped tube (28) is provided with a separate fixation member (24) fixing the flat-shaped tube (28) with respect to the vehicle under-floor (10).

5. The device according to any one of claims 1 through 4, further comprising a low-voltage electric wire (25), wherein the low-voltage electric wire (25) is aligned with the transversely-aligned high-voltage electric wires (22).

## Patentansprüche

1. Vorrichtung mit einem Fahrzeug und einem Kabelbaum, wobei das Fahrzeug ein HybridFahrzeug (1) oder ein Elektrofahrzeug ist,
wobei der Kabelbaum aufweist
mehrere Hochspannungselektrokabel (22), die sich von einem vorderen Bereich (6) im Inneren des Fahrzeugs durch einen Fahrzeugunterboden (10), der außerhalb eines Fahrzeugkarosserierahmens (8) angeordnet ist, zu einem hinteren Bereich (7) im Inneren des Fahrzeugs erstrecken, wobei die mehreren Hochspannungselektrokabel (22) einen Umrichter (4) mit einer Batterie (5) oder mit einem Motor (3) verbinden; und
eine Schutzkomponente (23), wobei die Schutzkomponente (23) mindestens ein Rohr (28), das aus isolierendem Kunstharz hergestellt ist, aufweist, wobei das Rohr (28) an dem Fahrzeugunterboden (10) angeordnet ist,
wobei das Rohr (28) ohne Naht hergestellt ist und wobei das Rohr (28) in einer Faltenbalgform ausgebildet ist, sodass das Rohr (28) biegbar ist, wobei die Faltenbalgform einen umlaufenden erhabenen Bereich (29) und einen umlaufenden vertieften Bereich (30) aufweist, die abwechselnd in axialer Richtung in kontinuierlicher Weise angeordnet sind, und wobei die Schutzkomponente (23) die mehreren Hochspannungselektrokabel (22) schützt,
**dadurch gekennzeichnet, dass**
das Rohr (28) ein flachgeformtes Rohr (28) ist und eine nicht-kreisförmige Querschnittsform hat, wobei das flachgeformte Rohr (28) einen Innenraum hat, der einer Anordnung der Hochspannungselektrokabel (22), die in einer Reihe ausgerichtet sind, entspricht, wobei der erhabene Bereich (29) des flachgeformten Rohrs (28) eine obere Fläche (34) aufweist, die direkt in Fläche-an-Fläche-Kontakt an dem Fahrzeugunterboden (10) montiert ist, und
das flachgeformte Rohr (28) benachbart zu einer Verstärkung (11) angeordnet ist, die an dem Fahrzeugkarosserierahmen (8) so vorgesehen ist, dass sie aus dem Fahrzeugunterboden (10) in Richtung zum Boden hervorsteht, und wobei das flachgeformte Rohr (28) eine Höhe (H2) hat, mit der es aus dem Fahrzeugunterboden (10) zum Boden bevorsteht, die kleiner ist als eine Höhe (H 1) der Verstärkung (11).

2. Vorrichtung nach Anspruch 1, wobei der Innenraum des flachgeformten Rohrs (28) so eingerichtet ist, dass das Hochspannungselektrokabel (22) als ein Rohrverformungs-Justierelement dient, wenn eine externe Kraft auf das flachgeformte Rohr (29) einwirkt und eine nach innen gerichtete Verformung an dem flachgeformten Rohr (28) hervorruft.

3. Vorrichtung nach Anspruch 1 oder 2, wobei das Hochspannungselektrokabel (22) ein Hochspannungselektrokabel mit flacher Form (62, 69) mit einem Leiter (70) ist, der ausgewählt ist aus: einem Flachleiter (64) mit einer rechteckigen Querschnittsform; und einem im Wesentlichen flachen Leiter (70), der aus mehreren Einzeldrähten oder verdrillten Drähten, die in einer Linie ausgerichtet sind, ausgebildet ist.

4. Vorrichtung nach einem der Ansprüche 1 bis 3, wobei das flachgeformte Rohr (28) mit einem separaten Befestigungselement (24) versehen ist, mit welchem das flachgeformte Rohr (28) in Bezug auf den Fahrzeugunterboden (10) befestigt ist.

5. Vorrichtung nach einem der Ansprüche 1 bis 4, die ferner ein Niederspannungselektrokabel (25) aufweist, wobei das Niederspannungselektrokabel (25) zu den quer ausgerichteten Hochspannungselektrokabeln (22) ausgerichtet ist.

## Revendications

1. Dispositif comprenant un véhicule et un faisceau de fils, dans lequel le véhicule est un véhicule hybride (1) ou un véhicule électrique,
dans lequel le faisceau de fils comprend
une pluralité de fils électriques haute tension (22) s'étendant à partir d'une partie avant (6) à l'intérieur du véhicule à travers un plancher de véhicule (10) situé à l'extérieur d'un châssis de véhicule (8) vers une partie arrière (7) à l'intérieur du véhicule, la pluralité de fils électriques haute tension (22) connectant un onduleur (4) à une batterie (5) ou à un moteur (3) ; et
un élément de protection (23),
dans lequel l'élément de protection (23) comprend au moins un tube (28) fabriqué en résine synthétique isolante, le tube (28) étant situé au niveau du plancher de véhicule (10),
dans lequel le tube (28) est formé d'une manière sans joint,
dans lequel le tube (28) est formé en une forme en accordéon pour permettre au tube (28) de se courber, la forme en accordéon ayant une partie de saillie circonférentielle (29) et une partie de cavité circonférentielle (30) qui sont disposées alternativement dans une direction axiale d'une manière sans joint, et dans lequel l'élément de protection (23) protège la pluralité de fils électriques haute tension (22), **caractérisé en ce que**
le tube (28) est un tube de forme plate (28) et a une forme de section transversale non circulaire, le tube de forme plate (28) a un espace interne correspondant à un agencement des fils électriques haute tension (22) alignés en une rangée,
la partie de saillie (29) du tube de forme plate (28) a une face supérieure (34) montée directement, dans un contact de surface à surface, sur le plancher de véhicule (10), et
le tube de forme plate (28) est disposé adjacent à un renfort (11) prévu au niveau du châssis de véhicule (8) de manière à faire saillie à partir du plancher de véhicule (10) vers un sol, et dans lequel le tube de forme plate (28) a une hauteur (H2), avec laquelle il fait saillie à partir du plancher de véhicule (10) vers le sol, inférieure à une hauteur (H1) du renfort (11).

2. Dispositif selon la revendication 1, dans lequel l'espace interne du tube de forme plate (28) est ajusté de telle sorte que le fil électrique haute tension (22) sert d'élément de régulation de déformation de tube lorsqu'une force externe est appliquée sur le tube de forme plate (29) et a provoqué une déformation vers l'intérieur du tube de forme plate (28).

3. Dispositif selon la revendication 1 ou 2, dans lequel le fil électrique haute tension (22) est un fil électrique haute tension de forme plate (62, 69) comprenant un conducteur (70) choisi dans un groupe comprenant : un conducteur plat (64) ayant une forme de section transversale de forme rectangulaire ; et un conducteur sensiblement plat (70) formé avec une pluralité de fils élémentaires ou de fils torsadés alignés en une ligne.

4. Dispositif selon l'une quelconque des revendications 1 à 3, dans lequel le tube de forme plate (28) est pourvu d'un élément de fixation séparé (24) fixant le tube de forme plate (28) par rapport au plancher de véhicule (10).

5. Dispositif selon l'une quelconque des revendications 1 à 4, comprenant en outre un fil électrique basse tension (25), dans lequel le fil électrique basse tension (25) est aligné avec les fils électriques haute tension alignés transversalement (22).
